(19) Europäisches Patentamt
European Patent Office
Office européen des brevets

(11) **EP 1 064 581 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.⁷: **G02B 21/36**, G02B 21/26, G01N 15/14

(21) Anmeldenummer: **99916776.0**

(22) Anmeldetag: **11.03.1999**

(86) Internationale Anmeldenummer:
**PCT/DE99/00664**

(87) Internationale Veröffentlichungsnummer:
**WO 99/49348 (30.09.1999 Gazette 1999/39)**

(54) **VERFAHREN ZUR VIDEO-MIKROSKOPIE**

VIDEO MICROSCOPY METHOD

MICROSCOPIE VIDEO

(84) Benannte Vertragsstaaten:
**DE ES FR GB IT NL**

(30) Priorität: **23.03.1998 DE 19812599**

(43) Veröffentlichungstag der Anmeldung:
**03.01.2001 Patentblatt 2001/01**

(73) Patentinhaber: **Leica Microsystems Wetzlar GmbH**
**35530 Wetzlar (DE)**

(72) Erfinder: **GANSER, Michael**
**D-35398 Giessen (DE)**

(74) Vertreter: **Reichert, Werner F., Dr.**
**Leica Microsystems International Holdings GmbH,**
**Konzernstelle Patente + Marken,**
**Postfach 20 20**
**35530 Wetzlar (DE)**

(56) Entgegenhaltungen:
**EP-A- 0 119 857          EP-A- 0 353 504**
**EP-A- 0 453 239**

• **PATENT ABSTRACTS OF JAPAN vol. 018, no. 102 (E-1511), 18. Februar 1994 (1994-02-18) & JP 05 300521 A (HITACHI DENSHI LTD), 12. November 1993 (1993-11-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Video-Mikroskopie gemäß dem Oberbegriff des Anspruchs 1.

Optische Systeme, wie beispielsweise auch Mikroskope, sind üblicherweise so aufgebaut, daß die Mitte eines Bildfeldes mit der optischen Achse zusammenfällt. Beim Fokussieren oder beim Umschalten der Vergrößerung ändern deshalb Bildpunkte in der Mitte eines Bildfeldes ihre Lage im Bildfeld nicht. Alle Bildpunkte außerhalb der optischen Achse, also außerhalb der Bildmitte, wandern beim Fokussieren oder bei einer Vergrößerungsumschaltung entsprechend der Abbildung des optischen Systems nach außen bzw. nach innen.

In Mikroskopen wird beim Wechsel des Objektivs durch hohe optische und mechanische Präzision gewährleistet, daß die Bildmitte stets auf der optischen Achse erhalten bleibt. Ein Objekt, das mit verschiedenen Vergrößerungen betrachtet werden soll, muß vor der Vergrößerungsumschaltung soweit in die Bildmitte gerückt werden, daß es beim Vergrößerungswechsel nicht aus dem Bild herausfällt.

Dieses manuelle Hin- und Herrücken ist insbesondere dann störend und zeitintensiv, wenn größere Objekte systematisch Feld um Feld abgesucht werden müssen oder wenn die Vergrößerung häufig gewechselt werden muß.

In der Video-Mikroskopie, bei der ein Mikroskopbild mit einer Videokamera aufgenommen, verarbeitet und auf einem Monitor dargestellt wird, wird mit häufigerem Vergrößerungswechsel als bei konventioneller Mikroskopie mit Okularen gearbeitet. Dies liegt daran, daß die Videokamera die Größe und Auflösung des Kamerabildes begrenzt. Dadurch ist bei gegebenem Bildfeld die Auflösung des Videobildes sehr viel geringer als die Auflösung des Bildes im Okular.

Zur Zeit gebräuchliche Videokameras können außerdem nur einen zentralen Ausschnitt aus dem Okularbild aufnehmen. Zur Betrachtung eines größeren Objektes mit einer Videokamera auf einem Mikroskop muß daher das Objekt häufiger als bei der Okularbetrachtung verschoben und in der jeweiligen Position in den verschiedenen Vergrößerungen untersucht werden. Bei einem Vergrößerungswechsel verschwindet ein außerhalb der Bildmitte liegendes, betrachtetes Detail des Objekts häufig vom Monitor. Dann muß das Objekt erst passend verschoben und das Detail in der neuen Vergrößerungsstufe erneut visuell gesucht und fixiert werden.

Der häufige Vergrößerungswechsel mit dem dazu erforderlichen Hin- und Herrücken des Objekts führt zu einem unerwünscht hohen Zeitaufwand. Die Arbeit ist für den Anwender des Video-Mikroskopie-Systems außerdem sehr unergonomisch und ermüdend, weil die Augen bei jedem Vergrößerungswechsel einen Hell-Dunkel-Reiz erfahren und danach ein gewünschtes Detail neu suchen und fixieren müssen.

Die DE 691 12 111 T2 beschreibt ein optisches Mikroskop für die Video-Mikroskopie, bei dem in einem Übersichtsbild mit kleiner Vergrößerung durch zwei Mausclicks ein rechteckiges Teilfenster auf dem Monitor eröffnet und dieses durch einmaliges Verfahren des Probentisches zentriert wird. Danach erscheint in allen Vergrößerungsstufen stets das mittenzentrierte Teilfenster. Nachteilig ist, daß das Übersichtsbild verloren geht und erst unter umständlichem Verschieben der Probe wieder gesucht werden muß. Weiterhin erweist es sich als zeitaufwendig und mühsam, daß alle Bildpunkte außerhalb der optischen Achse bei einer Vergrößerungsumschaltung im Bild nach außen oder innen wandern und visuell erst wieder gesucht und fixiert werden müssen.

Der Anspruch 1 geht in seinem Oberbegriff von einem Verfahren aus, wie es beispielsweise in EP-A-0 453 239 beschrieben wird.

Es ist daher Aufgabe der vorliegenden Erfindung, ein Verfahren anzugeben, mit welchem dem Anwender ein ausgewähltes Bilddetail in allen Vergrößerungsstufen automatisch im gleichen Monitorbereich angezeigt wird.

Diese Aufgabe wird erfindungsgemäß durch die im Patentanspruch 1 angegebenen Merkmale gelöst. Weitere vorteilhafte Weiterbildungen der Erfindung sind Gegenstand der Unteransprüche.

Die Erfindung beruht auf der Idee, die Ablage eines betrachteten Bilddetailpunkts von der Bildmitte maßstabsmäßig zu erfassen und nach einer Vergrößerungsumschaltung durch geeignetes motorisches Verstellen des Mikroskoptisches mit dem aufliegenden Objekt die Lage des Bilddetailpunkts auf dem Monitor ortsfest zu halten.

Die Erfindung wird anhand eines Ausführungsbeispiels mit Hilfe der schematischen Zeichnung näher erläutert.

Die Figur zeigt ein Mikroskop 1 mit einer optischen Achse 2 durch eine im Mikroskop-Oberteil verdeckt eingebaute Mikroskop-Optik 3 und ein in Arbeitsposition befindliches Mikroobjektiv 4 an einem Objektivrevolver 6. Oben weist das Mikroskop 1 einen Kameraausgang 5 auf, der auf die optische Achse 2 zentriert ist. In bekannter Weise erfolgt die Auswahl der Vergrößerungseinstellung durch Einschwenken eines gewünschten Mikroobjektivs 4 in den Strahlengang mit der optischen Achse 2. Das Mikroskop 1 ist mit einer hier nicht dargestellten Kodierung der Vergrößerungseinstellung am Objektivrevolver 6 ausgestattet Diese Vergrößerungs-Kodierung besteht beispielsweise in einer Stichmarken-Kodierung der zur Befestigung der Objektive dienenden Öffnungen an einem schwenkbaren unteren Teil des Objektivrevolvers 6 und einem Sensor an einem oberen feststehenden, mit dem Stativ verbundenen Teil des Objektivrevolvers 6. Die jeweils in den Strahlengang eingeschwenkte Objektivrevolver-Öffnung liefert dann durch die ihr zugeordnete Strichmarken-Kodierung am Ausgang des Sensors ein unverwechselbares Signal. Vor Beginn des Mikroskopierens muß daher die Zuordnung der verwendeten Mikroobjektive zu den Objektivrevolver-Öffnungen definiert werden. Weiterhin ist das Mikroskop 1 mit einem verfahrbaren Mikroskoptisch 7 ausgestattet, der eine motorische und kodierte Tischsteuerung 8 in x- und y-Richtung aufweist. Auf dem Mikroskoptisch 7 ist ein Objekt 9 aufgelegt, das durch das Mikroobjektiv 4 und die Mikroskop-Optik 3 auf den Kameraausgang 5 des Mikroskaps 1 abgebildet wird. Auf dem Kameraausgang 5 ist eine Videokamera 10 montiert. Die Bildmitte des Videobildes stimmt mit dem Durchstoßpunkt der optischen Achse 2 des Mikroskops 1 überein. Die Videokamera 10 ist mit einem AD-Bildsignal-Konverter 11 (einem sogenannten "frame grabber") verbunden. Die analogen Ausgangssignale der Videokamera 10 werden von dem AD-Bildsignal-Konverter 11 digitalisiert und in einem integrierten Bildspeicher zwischengespeichert. Von dort werden die digitalen Bildsignale auf einem Personal Computer (PC) 12 übertragen und auf einem mit dem PC 12 verbundenen Monitor 13 sichtbar gemacht.

Die beschriebenen Vorrichtungselemente und die bisher durchgeführten Verfahrensschritte sind bekannt. Nachfolgend werden die erfindungsgemäßen Verfahrensschritte beschrieben.

Ein außerhalb der optischen Achse 2 liegender Objektdetailpunkt 14 des Objekts 9 wird im Mikroskopbild und damit auch im Videobild, das auf dem Monitor 13 dargestellt wird, außerhalb der Mitte als Bilddetailpunkt 15 abgebildet. Wird ein solcher abseits gelegener Bilddetailpunkt 15 betrachtet, so wird er bei einer Vergrößerungsumschaltung seine Lage auf dem Monitor 13 verändem. Oft wird eine Vergrößerungsumschaltung sogar dazu führen, daß der Bilddetailpunkt 15 vom Monitor 13 verschwindet, so daß der Mikroskopanwender den Bilddetailpunkt 15 aus dem Bildfeld verliert. Nach dem erfindungsgemäßen Verfahren wählt der Anwender mit einer mit dem PC 12 verbundenen Computer-Maus 16 den gewünschten Bilddetailpunkt 15 durch Anclicken aus, welches er mit verschiedenen Vergrößerungen auf dem Monitor 13 betrachten will.

Der eingestellte Vergrößerungsfaktor des Videosystems ist bestimmt durch den Mikroskopvergrößerungsfaktor und den Kameravergrößerungsfaktor, mit dem das Mikroskopbild am Kameraausgang 5 des Mikroskops 1 auf die Größe des Videochips der Videokamera 10 reduziert wird. Der aktuell eingestellte Mikroskopvergrößerungsfaktor hängt von dem jeweils in den Strahlengang eingeschwenkten Mikroobjektiv 4 ab.

Im PC 12 müssen daher vor Beginn der Mikroskopie-Arbeiten die notwendigen Größen, also Mikroskopvergrößerungsfaktor, Kameravergrößerungsfaktor, verwendete Mikroobjektiv-Vergrößerungen und die Pixelbreite des Videochips (z. B. in μm), sowie die Zuordnung der verwendeten Mikroobjektive zu den kodierten Öffnungen des Objektivrevolvers 6 abgespeichert werden.

Der eingestellte Vergrößerungsfaktor $V_l$ des Videosystems einer Anzahl möglicher Vergrößerungsfaktoren wird nach Abfrage der Vergrößerungskodierung am Objektivrevolver 6 des Mikroskops 1 bestimmt.

Danach wird die Ablage des Bilddetailpunkts 15 relativ von der Bildfeldmitte, gegeben durch den Durchstoßpunkt der optischen Achse 2, maßstäblich ermittelt. Die Ablage des Bilddetailpunkts 15 wird angegeben durch seine Bildkoordinaten, deren Maßstab aus der Pixelbreite des Video-Kamera-Chips bestimmt wird.

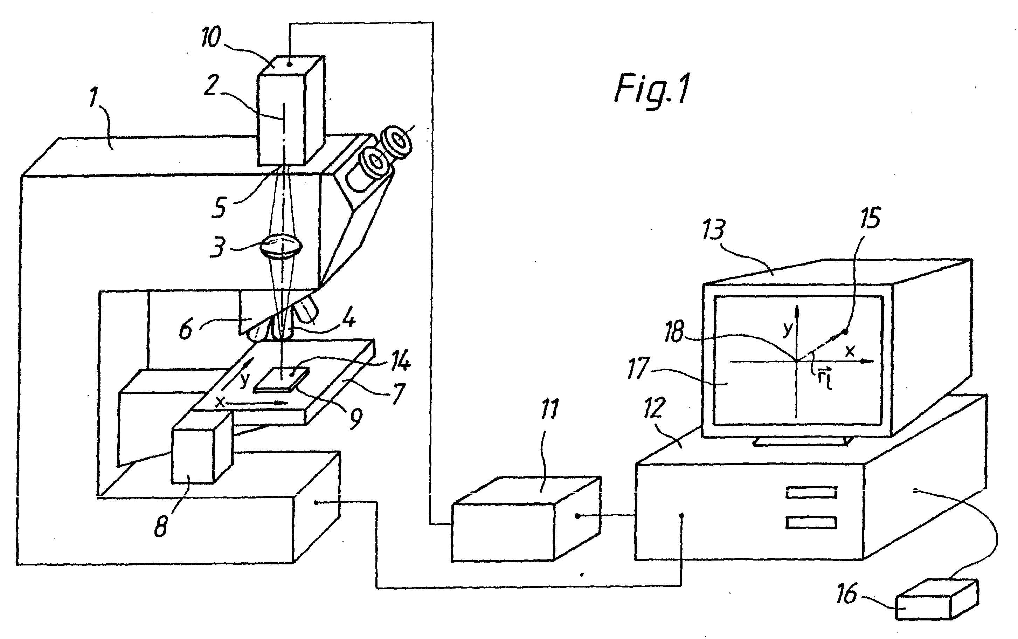

Fig. 1 zeigt schematisch einen Monitorschirm 17 mit einem Bildausschnitt des Objekts 9 und außerhalb der Bildfeldmitte 18 einem Bilddetailpunkt 15 mit den Bildkoordinaten $\vec{r} = (x,y)$. Die Bildfeldmitte 18 ist der Ursprung des gewählten x-y-Koordinatensystems.

Zur Bestimmung der Bildkoordinaten $\vec{r}_l$ werden die dem Bilddetailpunkt 15 zugeordneten digitalen Zeilen- und Spalten-Bildwerte aus dem Bildspeicher des AD-Bildsignal-Konverters 11 ausgelesen. Mit Hilfe des bekannten Vergrößerungsfaktors $V_l$ des Videosystems und der bekannten Pixelbreite der Kamera werden dann die Bildkoordinaten $\vec{r}_l = (x_l, y_l)$ des Bilddetailpunkts 15 maßstäblich bestimmt.

Die Objektkoordinaten $\vec{p}_l$ des zugehörigen Objektdetailpunkts 14 auf dem Objekt 9 sind $\vec{p}_l = \vec{r}_l / V_l$.

Es gilt nun anzugeben, um welchen Vektor das Objekt 9 verschoben werden muß, um den Bilddetailpunkt 15 nach einer Umschaltung von der Vergrößerung $V_l$ auf eine andere Vergrößerung $V_m$ auf dem Monitor 13 festzuhalten. Dazu wird folgende Betrachtung angestellt: Nach der gewünschten Objektverschiebung sollen die Bildkoordinaten $\vec{r}_l$, $\vec{r}_m$ in beiden Vergrößerungseinstellungen gleich sein, d.h. es soll gelten:

$$\vec{r}_l = \vec{r}_m .$$

Dazu muß für die Objektkoordinaten gelten:

$$\vec{p}_m - \vec{p}_l = \vec{r}_l / V_m - \vec{r}_l / V_l = \vec{p} \neq 0.$$

Dabei gibt der Verschiebungsvektor $\vec{p}$ die gesuchte maßstäbliche Objektverschiebung an. Man erhält also für die erforderliche Objektverschiebung:

$$\vec{p} = \vec{r}_l(1/V_m - 1/V_l).$$

Im letzten Verfahrensschritt wird das Objekt 9 mit dem Mikroskoptisch 7 vorzeichenrichtig um $\vec{p}$ verschoben, so daß der ausgewählte Bilddetailpunkt 15 auf dem Monitorschirm 17 ortsfest gehalten wird. Dabei gibt $\vec{p}$ bei geeigneter Wahl des Koordinatensystems direkt die erforderlichen Tischverfahrwege in x und y an.

Für eine optimale Funktion ist es erforderlich, daß zum einen die Pixelbreite der Videokamera 10 bekannt ist, weil sich daraus die Skalierung der erforderlichen Tischverfahrwege in x und y ableiten läßt. Weiterhin muß die Positioniergenauigkeit des Mikroskoptisches 7 mindestens in der Größenordnung der Pixelbreite der Videokamera 10 liegen. Um ein besonders zügiges Arbeiten nach einer Vergrößerungsumschaltung zu gewährleisten, muß eine möglichst schnelle Tischpositionierung möglich sein.

In dem anhand Fig. 1 beschriebenen Beispiel wird der im AD-BildsignalKonverter 11 integrierte Bildspeicher ausgenutzt und aus diesem die benötigten Bildkoordinaten $\vec{r}_l = (x_l, y_l)$ ausgelesen. Es ist aber ebenso möglich, einen weiteren Bildspeicher zu verwenden, um in diesem die digitalen Bildsignale abzulegen und die benötigten Bildkoordinaten auszulesen. Ein solcher weiterer Bildspeicher kann beispielsweise im Monitor integriert sein.

Bei den bisher bekannten Verfahren war nach einem Vergrößerungswechsel der Monitor 13 zwischendurch dunkel. Der ständige Hell-Dunkel-Wechsel bei häufigem Vergrößerungswechsel erwies sich für den Betrachter als sehr ermüdend. In einer vorteilhaften, ergonomischen Ausführungsform der Erfindung wird nach einer Vergrößerungsumschaltung das Video-Bild mit der vorigen Vergrößerungsstufe auf dem Monitor 13 beibehalten, bis der Mikroskoptisch 7 erfindungsgemäß verfahren wurde und das neue Video-Bild bereit-steht. Erst dann wird das neue Video-Bild auf den Monitor 13 gegeben. Dadurch wird die Dunkelphase beim Bildwechsel vermieden.

In einer weiteren ergonomischen Ausführungsform wird nach einer Vergrößerungsumschaltung die Beleuchtung des Mikroskops 1 automatisch auf beispielsweise vom Mikroskop-Anwender zu Beginn der Arbeit vorgewählte Werte für die Feldblende, die Aperturblende sowie die Intensität der Lichtquelle motorisch eingestellt. Diese vorgewählten Werte können beispielsweise als Tabelle in Abhängigkeit von der eingestellten Objektiv-Vergrößerung im Personal Computer 12 gespeichert und bei Bedarf abgerufen werden.

In einer anderen Ausführungsform liefert ein im Mikroskop 1 integrierter Bildhelligkeitssensor ein Ausgangssignal, von dem die vorgewählten Werte abhängen und entsprechend eingestellt werden.

Mit dem erfindungsgemäßen Verfahren wird ein zur Betrachtung ausgewählter Bilddetailpunkt 15 auch bei einem Vergrößerungswechsel auf dem Monitor 13 ortsfest gehalten. Nun ist bei einer Umschaltung auf eine höhere Vergrößerung häufig auch die Umgebung eines solchen ausgewählten Bilddetailpunkts 15 von Interesse. Liegt aber der ausgewählte Bilddetailpunkt 15 bereits nahe am Monitorrand, so erscheint bei einer Umschaltung auf eine höhere Vergrößerung nach Durchführung des erfindungsgemäßen Verfahrens zwar der Bilddetailpunkt 15 auf dem Monitor 13 ortsfest, ein Teil seiner interessanten Umgebung verschwindet jedoch vom Monitorrand.

Um auch die vollständige Umgebung des Bilddetailpunkts 15 betrachten zu können, wird in einer vorteilhaften Ausgestaltung des Verfahrens nach einer Vergrößerungsumschaltung auf eine höhere Vergrößerungsstufe das Objekt 9 nicht nur um den Vektor $\vec{p} = \vec{r}_l$ (1/ $V_m$ - 1/ $V_l$), sondern zusätzlich um einen vorgewählten Anteil $\Delta\vec{p}_k$ von $\vec{p}$ verschoben. Es gilt also $\Delta\vec{p}_k = k \cdot$ 1/ 100 · $\vec{p}$, wobei durch den Index k mit 0 < k < 100 ein Prozentsatz der Länge von $\vec{p}$ angegeben wird. Mit $\Delta\vec{p}_k$ wird der ausgewählte Bilddetailpunkt 15 samt seiner interessierenden Umgebung weiter zur Bildfeldmitte 18 hin gerückt.

So können in einer vorteilhaften Variante des Verfahrens je nach Änderung der Vergrößerungsstufe die vorgewählten Werte für $\Delta\vec{p}_k$ zwischen 5 % und 20 % der Objektverschiebung $\vec{p}$ betragen. Mit diesen kleinen $\Delta\vec{p}_k$ wird der Bilddetailpunkt 15 nur geringfügig auf dem Monitor 13 verrückt. Dadurch erscheint es mitsamt seiner Umgebung im wesentlichen ortsfest auf dem Monitor 13 und kann vorn Mikroskopanwender leicht visuell wiedergefunden und fixiert werden.

Die vorgewählte Auswahl für die Größe von $\Delta\vec{p}_k$ kann auf die geplante Anwendung abgestimmt werden. Wird beispielsweise von der Objektivvergrößerung "5x " auf die Objektiwergrößerung "10x" umgeschaltet, könnte dafür $\Delta\vec{p}_k$ als 10% von $p$ vorgewählt werden. Wird aber von der Objektiwergrößerung "5x " direkt auf die Objektivvergrößerung "50x" umgeschaltet, könnte dafür $\Delta\vec{p}_k$ als 20% von $\vec{p}$ vorgewählt werden.

Unter Verwendung eines Mikroskoptisches 7 mit der benötigten hohen Positioniergenauigkeit und einer hohen Tischverfahrgeschwindigkeit, bietet das neue Verfahren ein schnelles und komfortables Arbeiten in der Video-Mikroskopie selbst bei häufigem Vergrößerungswechsel an.

Damit erzielt man einen sehr ergonomischen Video-Mikroskopie-Arbeitsplatz, an dem selbst über längere Zeit ermüdungsfrei gearbeitet werden kann, weil beim Vergrößerungswechsel der gewählte Bilddetailpunkt 15 auf dem Monitorschirm 17 ortsfest erscheint bzw. samt seiner Umgebung im wesentlichen ortsfest auf dem Monitor verbleibt. Außerdem treten keine Hell-Dunkel-Wechsel auf und das Bild wird stets optimal beleuchtet.

Das erfindungsgemäße Verfahren ist nicht auf den in der Figur dargestellten Stativtyp beschränkt, sondern kann mit jedem beliebigen Mikroskopstativ durchgeführt werden, sofern die nötigen Voraussetzungen wie Kamera-Ausgang, kodierte Vergrößerungseinstellung und motorisierte und kodierte Mikroskoptisch-Steuerung vorhanden sind.

Bezugszeichenliste

1 - Mikroskop

2 - optische Achse des Mikroskops

3 - Mikroskop-Optik

4 - Mikroobjektiv

5 - Kamera-Ausgang des Mikroskops 1

6 - Objektivrevolver

7 - Mikroskoptisch

8 - motorische und kodierte Tischsteuerung des Mikroskoptisches 7

9 - Objekt

10 - Video-Kamera

11 - AD-Bildsignal-Konverter ("frame grabber")

12 - Personal Computer (PC)

13 - Monitor

14 - Objektdetailpunkt

15 - Bilddetailpunkt

16 - Computer-Maus

17 - Monitorschirm

18 - Bildfeldmitte

**Patentansprüche**

1. Verfahren zur Video-Mikroskopie

   - mit einem Mikroskop (1) mit Objektiven unterschiedlicher Vergrößerung, die von einem vergrößerungskodierten Objektivrevolver (6) getragen sind, mit einem Objekt (9) auf einem motorisch kodiert verfahrbaren Objekttisch (7), und mit einer auf die optische Achse zentrierten Videokamera (10), die das Objekt auf einem Monitor (13) abbildet,
   - wobei das Bildsignal der Videokamera in digitaler Form in einem Bildspeicher zwischengespeichert, auf einen Personal Computer übertragen und von diesem auf dem Monitor dargestellt wird,
   - und wobei ein darzustellender Bildbereich bei der aktuell vorliegenden Vergrößerung $V_0$ über eine mit dem Personal Computer verbundene Computermaus auf dem Monitor ausgewählt und durch Verfahren des Objekttisches relativ zur optischen Achse eingestellt wird,

   **dadurch gekennzeichnet,**

   - **daß** mit der Computermaus (16) ein einziger bei einer neuen Vergrößerung $V$ an derselben Monitorstelle darzustellender Bilddetailpunkt des Bildbereiches angeklickt wird,
   - **daß** bei der aktuellen Vergrößerung $V_0$ die Bildkoordinaten des auf die Mitte des Monitorbildes bezogenen Ortsvektors $\vec{r}$ des Bilddetailpunktes aus dem Bildspeicher ausgelesen und mit der Kamerapixelgröße skaliert werden
   - und **daß** das Verfahren des Objekttisches nach dem Vergrößerungswechsel von der aktuellen $V_0$ auf die neue Vergrößerung $V$ vorzeichenrichtig um einen Verschiebungsvektor $\vec{p}$ erfolgt, der gegeben ist durch $\vec{p} = \vec{r} * (1/V - 1/V_0)$.

2. Verfahren nach Anspruch 1, **dadurch gekennzeichnet, daß** bei einer Umschaltung in eine höhere Vergrößerungsstufe der Objekttisch zusätzlich um einen Hilfsvektor $\Delta\vec{p}_k$ verfahren wird, wobei

$$\Delta\vec{p}_k = -\frac{k}{100} \cdot p$$

mit $k$ = Prozentsatz, $0 < k < 100$, einem prozentualen Anteil des Verschiebungsvektors entspricht, durch welchen der Bilddetailpunkt auf dem Monitor weiter in Richtung Bildfeldmitte gerückt wird.

3. Verfahren nach Anspruch 2, **dadurch gekennzeichnet, daß** nur in einem bestimmten Randbereich des Monitors (13) liegende Bilddetailpunkte (15) um $\vec{p} + \Delta\vec{p}_k$, andere Bilddetails (15) jedoch nur um $\vec{p}$ verschoben werden.

4. Verfahren nach Anspruch 2 oder 3, **dadurch gekennzeichnet, daß** je nach Vergrößerungsstufe vorgewählte Werte $\Delta\vec{p}_k$ mit $0 < k \leq 20$ benutzt werden.

5. Verfahren nach Anspruch 1, 2, 3 oder 4, **dadurch gekennzeichnet, daß** die benötigten Bildkoordinaten $\vec{r}_l = (x_l, y_l)$ aus einem Bildspeicher eines AD-Bildsignal-Konverters (11) ausgelesen werden.

6. Verfahren nach Anspruch 1, 2, 3 oder 4, **dadurch gekennzeichnet, daß** die digitalen Bildsignale in einem weiteren Bildspeicher abgelegt werden und die benötigten Bildkoordinaten $\vec{r}_l = (x_l, y_l)$ aus diesem weiteren Bildspeicher ausgelesen werden.

7. Verfahren nach Anspruch 6, **dadurch gekennzeichnet, daß** der weitere Bildspeicher im Monitor (13) integriert ist.

8. Verfahren nach Anspruch 1, 2, 3 oder 4,

**dadurch gekennzeichnet, daß** nach einer Vergrößerungsumschaltung der Mikroskoptisch (7) erfindungsgemäß verfahren wird und erst danach das neue Videobild auf dem Monitor (13) dargestellt wird.

9. Verfahren nach einem der vorhergehenden Ansprüche,
   **dadurch gekennzeichnet, daß** nach einer Vergrößerungsumschaltung die Beleuchtung des Mikroskops (1) automatisch auf vorgewählte Werte für die Feldblende, die Aperturblende sowie die Intensität der Lichtquelle motorisch eingestellt wird.

10. Verfahren nach Anspruch 9,
    **dadurch gekennzeichnet, daß** die vorgewählten Werte in Abhängigkeit von der aktuellen Vergrößerung eingestellt werden.

11. Verfahren nach Anspruch 9,
    **dadurch gekennzeichnet, daß** die vorgewählten Werte in Abhängigkeit eines Ausgangssignals eines Bildhelligkeitssensors eingestellt werden.

**Claims**

1. Method for video microscopy

   - with a microscope (1) with objectives of different magnification, which are carried by a magnification-coded objective revolver (6), with an object (9) on a motorised object table (7) movable in coded manner and with a video camera (10), which is centred on the optical axis and which images the object on a monitor (13),
   - wherein the image signal of the video camera is intermediately stored in digital form in an image store, transmitted to a personnel computer and illustrated by this on the monitor and
   - wherein an image region, which is to be illustrated, at the actually present magnification $V_0$ is selected on the monitor by way of a computer mouse connected with the personal computer and adjusted by movement of the object table relative to the optical axis,

   **characterised in that**

   - that a single image detail point, which is to be illustrated at a new magnification V at the same monitor position, of the image region is clicked onto by the computer mouse (16),
   - that at the actual magnification $V_0$ the image co-ordinates of the positional vector $\vec{r}$, which is related to the centre of the monitor image, of the image detail point are read out of the image store and scaled by the camera pixel size and

   - that the movement of the object table after the magnification change from the actual magnification $V_0$ to the new magnification $V$ takes place correctly with respect to sign by a displacement vector $\vec{p}$ which is given by $\vec{p} = \vec{r} * (1/V-1/V_0)$.

2. Method according to claim 1, **characterised in that** in the case of switching over to a higher magnification step the object table is additionally moved by an additional vector $\Delta p_k$, wherein

$$\Delta\vec{p}_k = -\frac{k}{100}\cdot\vec{p},$$

   wherein $k$ = percentage $0 < k < 100$, corresponds to a percentage proportion of the displacement vector by which the image detail point on the monitor is moved again in the direction of the image field centre.

3. Method according to claim 2, **characterised in that** only image detail points (15) lying in a specific edge region of the monitor (13) are displaced by $\vec{p} + \Delta\vec{p}_x$, other image details (15) being displaced only by $\vec{p}$.

4. Method according to claim 2 or claim 3, **characterised in that** preselected values $\Delta\vec{p}_k$, wherein $0 < k \leq 20$, are used in accordance with the respective magnification step.

5. Method according to claim 1, 2, 3 or 4, **characterised in that** the requisite image co-ordinates $\vec{r}_l = (x_l, y_l)$ are read out of an image store of an analog-to-digital image signal converter (11).

6. Method according to claim 1, 2, 3 or 4, **characterised in that** the image signals are filed in a wider image store and the requisite image co-ordinates $\vec{r}_l = (x_l, y_l)$ are read out of this wider image store.

7. Method according to claim 6, **characterised in that** the wider image store is integrated in the monitor (13).

8. Method according to claim 1, 2, 3 or 4, **characterised in that** after a changeover in magnification the microscope table (7) is moved in accordance with the invention and only thereafter is the new video image illustrated on the monitor (13).

9. Method according to one of the preceding claims, **characterised in that** after a changeover in magnification the illumination of the microscope (1) is automatically adjusted in motorised manner to preselected values for the field light stop, the aperture light stop and the intensity of the light source.

**10.** Method according to claim 9, **characterised in that** the preselected values are adjusted in dependence on the actual magnification.

**11.** Method according to claim 9, **characterised in that** the preselected values are adjusted in dependence on an output signal of an image brightness sensor.

**Revendications**

**1.** Procédé destiné à la microscopie vidéo

avec un microscope (1) avec des objectifs de grossissements différents, supportés par une tourelle d'objectifs (6) avec codage des grossissements, avec un objet (9) sur une platine d'objet (7) avec déplacement moteur codé et avec une caméra vidéo (10) centrée sur l'axe optique, la caméra vidéo représentant l'objet sur un moniteur (13),
le signal d'image de la caméra vidéo étant bufférisé sous forme numérique dans une mémoire d'images, transmis à un ordinateur personnel et représenté par celui-ci sur le moniteur, et une zone d'image à représenter dans le cas du grossissement actuellement existant $V_o$ étant sélectionnée sur le moniteur par l'intermédiaire d'une souris d'ordinateur reliée à l'ordinateur personnel et étant réglée par le biais du déplacement de la platine de l'objet par rapport à l'axe optique,

**caractérisé en ce**

**qu'**on clique avec la souris d'ordinateur (16) dans le cas d'un nouveau grossissement sur un seul point de détail de l'image de la zone d'image $V$ à représenter au même endroit du moniteur,
**que** les coordonnées d'image du rayon vecteur $F$ du point de détail de l'image spécifiques au centre de l'image du moniteur sont extraites de la mémoire d'images et cadrées avec la taille de pixels de la caméra dans le cas du grossissement actuel $V_o$
et **que** le procédé de la platine d'objet résulte après le changement de grossissement du grossissement actuel $V_o$ au nouveau grossissement $V$ conformément aux signes d'un vecteur de déplacement $P$ qui est donné par $\bar{P} = \bar{r} \neq (1 / V - 1 / V_0)$.

**2.** Procédé selon la revendication 1, **caractérisé en ce qu'**en cas de commutation sur un degré de grossissement plus fort, la platine de l'objet est déplacée en plus d'un vecteur auxiliaire $\Delta P_k$,

$$\Delta P_k = -\frac{k}{100} \cdot \bar{P}$$

avec $k$ = pourcentage, $0 < k < 100$, correspondant à un pourcentage du vecteur de déplacement, par le biais duquel le point de détail de l'image continue à être déplacé sur le moniteur en direction du centre du champ d'image.

**3.** Procédé selon la revendication 2, **caractérisé en ce que** seuls des points de détail de l'image (15) qui se trouvent dans une zone périphérique déterminée du moniteur (13) sont déplacés de $\bar{P} + \Delta P_k$ mais d'autres détails de l'image (15) uniquement de $\bar{P}$.

**4.** Procédé selon la revendication 2 ou 3, **caractérisé en ce que** des valeurs $\Delta P_k$ présélectionnées suivant le degré de grossissement sont utilisées avec $0 < k \leq 20$.

**5.** Procédé selon les revendications 1, 2, 3 ou 4, **caractérisé en ce que** les coordonnées d'image nécessaires $\bar{r}_l = (x_l, y_l)$ sont extraites d'une mémoire d'images d'un convertisseur de signaux d'images analogique - numérique (11).

**6.** Procédé selon les revendications 1, 2, 3 ou 4, **caractérisé en ce que** les signaux d'images numériques sont déposés en mémoire dans une autre mémoire d'images et les coordonnées d'images nécessaires $\bar{r}_l = (x_l, y_l)$ sont extraites de cette autre mémoire d'images.

**7.** Procédé selon la revendication 6, **caractérisé en ce que** l'autre mémoire d'images est intégrée dans le moniteur (13).

**8.** Procédé selon les revendications 1, 2, 3 ou 4, **caractérisé en ce que** la platine du microscope (7) est déplacée selon l'invention après une commutation du grossissement et la nouvelle image vidéo n'est représentée qu'ensuite sur le moniteur (13).

**9.** Procédé selon l'une des revendications précédentes, **caractérisé en ce qu'**après une commutation du grossissement, l'éclairage du microscope (1) est réglé automatiquement par moteur sur des valeurs présélectionnées pour le filtre du champ, le diaphragme, de même que l'intensité de la source lumineuse.

**10.** Procédé selon la revendication 9, **caractérisé en ce que** les valeurs présélectionnées sont réglées en fonction du grossissement actuel.

**11.** Procédé selon la revendication 9, **caractérisé en ce que** les valeurs présélectionnées sont réglées en fonction d'un signal de sortie d'un capteur de luminosité d'images.

Fig.1